Europäisches Patentamt

European Patent Office

Office européen des brevets

(11) Publication number: **0 360 610**
**A2**

## (12) EUROPEAN PATENT APPLICATION

(21) Application number: **89309639.6**

(22) Date of filing: **21.09.89**

(51) Int. Cl.⁵: **G 09 B 9/04**
**A 63 J 23/02**

(30) Priority: **21.09.88 GB 8822210**

(43) Date of publication of application:
**28.03.90 Bulletin 90/13**

(84) Designated Contracting States:
**AT BE CH DE ES FR GB GR IT LI LU NL SE**

(71) Applicant: **'SUPER X' LTD.**
**Briton House Briton Street**
**Southampton SO1 1BS (GB)**

(72) Inventor: **Denne, Phillip Michael Raymond**
**7 Lyndon Gate Chine Crescent Road**
**Bournemouth BH2 5LG (GB)**

(74) Representative: **Gibson, Stewart Harry et al**
**URQUHART-DYKES & LORD Business Technology**
**Centre Senghennydd Road**
**Cardiff CF2 4AY South Wales (GB)**

(54) Simulator apparatus.

(57) A control system for a travel simulator comprises a video playback unit 10 with means for detecting signals carried in off-screen lines of each and every frame of a video recording to be played back on the unit, and means 17, 18 for decoding the detected signals to control actuating means 22 with which the simulator is provided.

EP 0 360 610 A2

Description

## SIMULATOR APPARATUS

### FIELD OF THE INVENTION

This invention relates to travel simulator apparatus and more particularly to a control system for use in a simulator apparatus.

### BACKGROUND OF THE INVENTION

Various forms of travel simulator are known. In one form, the simulator comprises a cinema in which an audience is shown a pre-recorded continuous film of a forward-facing view, e.g. looking through a car windscreen, the cinema being mounted on a movable base which is displaced by hydraulic actuators to give the audience an impression of movement to correspond with the motion depicted in the film. In another form, the projector and screen are fixed but the audience is provided with seats or blocks of seats which are movable by hydraulic actuators.

In these and other forms of simulator, it is necessary to provide synchronism between the motion imparted by the hydraulic actuators and the moving images shown in the film. One way of doing this is by modulating a carrier tone incorporated in the sound track of the film or video recording. Alternatively, a digitally encoded record may be stored in a computer data memory and translated into a time sequence of control or command signals to actuate electrohydraulic control valves for the hydraulic actuators. This sequence runs automatically once it has been started, and it is started by a signal pre-recorded in the film or video (e.g. in the sound track) so as to synchronise the commencement of the visual program. It is a disadvantage of this arrangement that there is only a single instance of synchronisation, being at the start, and there is no way of correcting subsequent timing errors. Further it is not possible to stop the program and re-start it without returning to the beginning. It is also difficult to devise and compile the movement sequence for pre-recording.

### SUMMARY OF THE INVENTION

We have now devised a travel simulator control system which overcomes the above described difficulties of the known arrangements.

In accordance with this invention, there is provided a control system for a simulator, which control system comprises a video playback unit having means for detecting signals carried in off-screen lines of a video recording to be played back on the unit, and means for decoding the detected signals to control actuating means with which the simulator is provided.

In one embodiment, each frame of the video recording is encoded with an identifying code in the off-screen lines. The frame codes are detected and used to address a data memory in order to read out commands which control e.g. electrohydraulic control valves for hydraulic actuators which provide the movement of the simulator.

In another embodiment, the video recording carries command data in the off-screen lines. This command data is detected and decoded to act directly in controlling the e.g. electrohydraulic control valves for the hydraulic actuators.

### BRIEF DESCRIPTION OF THE DRAWINGS

Embodiments of this invention will now be described by way of examples only and with reference to the accompanying drawings, in which:

FIGURE 1 is a schematic block diagram of a prior art control system for a travel simulator;

FIGURE 2 is a schematic block diagram of one embodiment of simulator control system in accordance with this invention;

FIGURE 3 is a schematic block diagram of a second embodiment of simulator control system in accordance with this invention; and

FIGURE 4 is a schematic block diagram of a system for recording command data onto a video recording for use in the embodiment of control system shown in Figure 3.

### DETAILED DESCRIPTION OF THE DRAWINGS

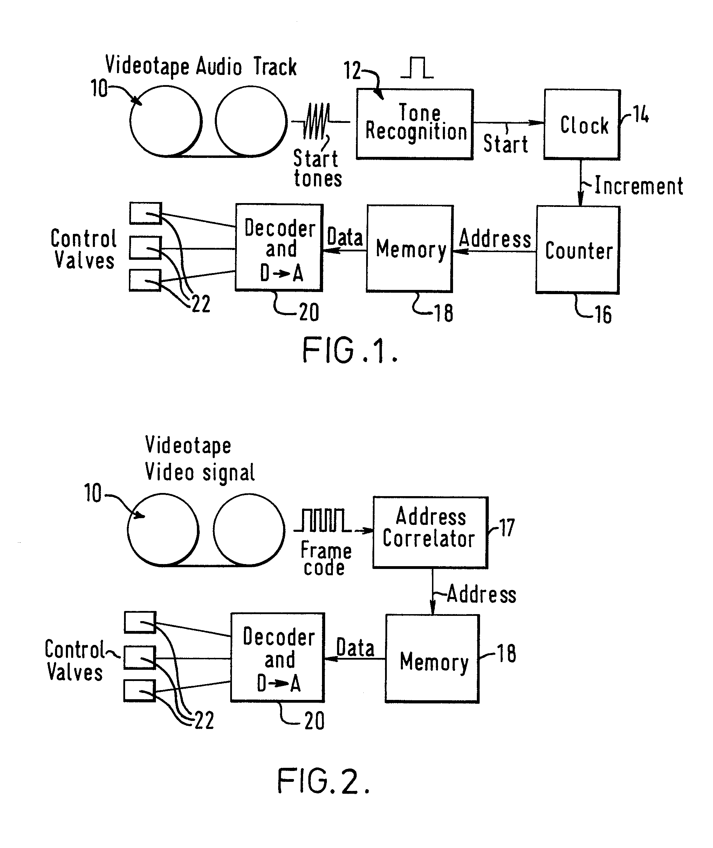

Referring to Figure 1, there is shown a prior art control system for a simulator. This control system comprises a video tape playback unit 10 and the video recording played back on this includes a start tone in the soundtrack. A detector 12 recognises the start tone in order to start a clock 14. This clock increments a counter 16 throughout the running of the video and at each instant the count within the counter is used to address a memory 18. The data stored within the memory 18 comprises command data for the control valves 22 for hydraulic actuators of the simulator. The data read from the memory is decoded and converted from digital to analogue by a decoder 20, the output signals being applied to the control valves 22.

The prior art system shown in Figure 1 suffers the disadvantages noted above, namely that there is no way of correcting any timing errors which develop after the initial synchronisation, it is not possible to stop and re-start a program without returning to the beginning, and it is difficult to compile the movement sequence for recording in the data memory.

Figure 2 shows one embodiment of control system in accordance with this invention. The video tape playback unit 10 plays a video recording which carries a frame code in the off-screen lines of each and every frame. The video playback unit 10 includes a detector for reading the frame codes and applying them to an address correlator 17 which uses each frame code to address the data memory 18. The remainder of the system corresponds to the prior art system shown in Figure 1, in that command data read out of the memory 18 is decoded and converted to analogue by the decoder 20, the output signals of which are used to control the valves 22.

With the system shown in Figure 2, it will be appreciated that the movement sequence is always kept in synchronism with the motion depicted in the video. Also, the video can be stopped at any time and started again at any selected point, yet the movement sequence will always remain synchronised with the visual program. Furthermore, the system facilitates the process of compiling the movement sequence and it is possible to remove errors in this sequence and insert new movements with precision.

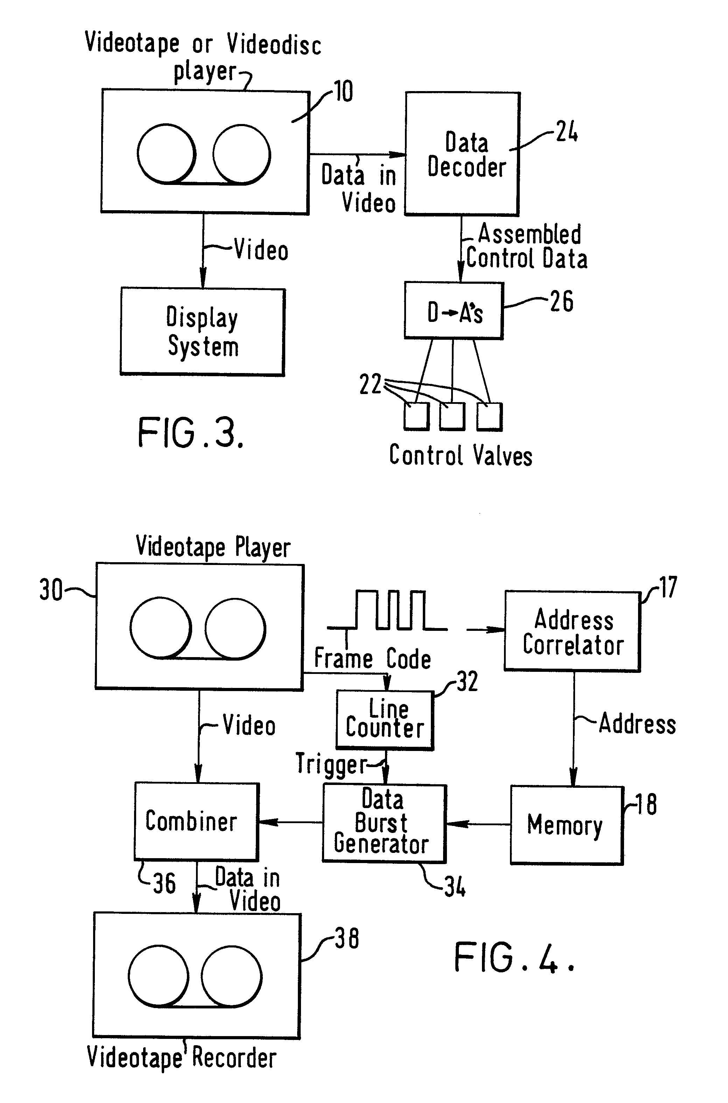

Referring to Figure 3, there is shown a second embodiment of simulator control system in accordance with the invention. The video playback unit 10 plays a video recording which carries command data in the off-screen lines of each and every frame. The playback unit includes a detector for reading out the command data from these off-screen lines and feeds the data to a decoder 24. The digital output from the decoder 24 is converted to analogue signals by a converter unit 26, which are then applied to the control valves 22 of the hydraulic actuators of the simulator motion system.

The control system of Figure 3 has the same advantage as the system of Figure 2, but has the further advantage that the one recording medium (the video tape) carries all of the program information for both the visual sequence and the movement sequence, fully pre-synchronised.

Figure 4 shows an arrangement for recording the movement sequence data onto the same videotape as the visual sequence. A videotape player 30 plays a video on which the visual sequence has already been recorded and edited. The recording further carries a frame code in the off-screen lines of each and every frame. The frame code is read from the video recording and used via an address correlator 17 to address a data memory holding command data appropriate for the respective frames of the recording. A line counter 32 triggers a data burst generator 34 at the appropriate line-count of each frame to pass the command data from memory 18 to a combiner 36 which combines the command data with the video signal from the videotape player 30 for re-recording the video, with the command signals in the off-screen lines, onto tape in a recorder 38.

In this way the downloading of command data onto the video is synchronised with the frame code of the frame to which that command data corresponds, and the data is stored on lines following the frame code. Instead, the frame code of the preceding frame may be used in order that the command data for each frame is recorded in lines earlier than the line carrying its frame code.

It will be appreciated that the video recording obtained by the videotape recorder 38 may be recompiled as a laser video disc in accordance with conventional standards.

In a simulator using the control system of Figure 3, one pre-recorded program or experience can be changed quickly to another by push-button selection.

The simulator control systems have been described in connection with passive simulators having arrangements for providing motion to members of the audience via hydraulic actuators. However the drive for creating the motion may be other than hydraulic. Also the command signals may be used to control devices, other than those controlling motion, which require controlling in synchronism with the movement depicted visually in the video recording. For example the command signals may control devices for injecting olefactory stimulants into an air conditioning system of the simulator at precisely controlled times during the program or experience. As another example, the command signals may be used to switch sound signals between different loudspeakers at different positions, e.g. at the front and back of the cinema, or to trigger devices generating non-recorded special sound effects. As a further example, the command signals may be used to control a device for superimposing a visual image on the video image itself: this visual image might be, for example, a pointer on a control dial or a gun sight. The command signal may be combined with the picture signal via a delay so as to be displayed on the screen superimposed on the picture. Alternatively the command signal may be used to drive a separate display device positioned adjacent the screen.

## Claims

1) A control system for a simulator, which control system comprises a video playback unit (10) having means for detecting signals carried in off-screen lines of a video recording to be played back on the unit, and means (17, 18, 20) for decoding the detected signals to control actuating means (22) with which the simulator is provided.

2) A control system as clarified in claim 1, in which the signals which are carried in off-screen lines of the video recording comprise codes identifying respective frames of the video recording, and in which the decoding means addresses a data memory (18) in accordance with the frame identifying codes in order to read out commands which control said actuating means (22).

3) A control system as claimed in claim 1, in which the signals which are carried in the off-screen lines of the video recording comprise command data and the decoding means (24) applies this data to control said actuating means (22).

4) A recording system for recording command data onto a visual sequence video recording for a simulator, comprising a video playback unit (30) for playing a visual sequence recording which carries frame identifying codes in off-screen lines thereof, means for detecting said frame identifying codes and using said codes to address a data memory (18) holding command data, a video recorder (38) for re-recording the visual sequence video recording and means for recording the command data read from the data memory in off-screen lines of the re-recording.

FIG.1.

FIG.2.

FIG.3.

FIG.4.